# FASCICULE DE BREVET EUROPEEN

(11) **EP 2 137 472 B1**
(45) Date de publication et mention de la délivrance du brevet: **23.03.2016**
(21) Numéro de dépôt: 08718188.9
(22) Date de dépôt: 25.03.2008
(51) Int. Cl.: A01N 1/02, F25D 3/10

(54) **DISPOSITIF DE TRANSPORT ET/OU DE STOCKAGE COMPORTANT UNE AMPOULE ISOLANTE A DOUBLE PAROI**
TRANSPORT- UND/ODER AUFBEWAHRUNGSVORRICHTUNG MIT EINER DOPPELWANDIGEN ISOLIERAMPULLE
TRANSPORTATION AND/OR STORAGE DEVICE COMPRISING A DOUBLE-WALLED INSULATING BULB

(30) Priorité: 29.03.2007 FR 0754114
(43) Date de publication de la demande: 30.12.2009
(73) Titulaire: ST Reproductive Technologies, LLC, Navasota, TX 77868 (US)
(72) Inventeur: Cognard, Eric, 61420 Fontenay Les Louvets (FR)
(74) Mandataire: Kador, Utz Ulrich
(86) Numéro de dépôt international: PCT/EP2008/053503
(87) Numéro de publication internationale: WO 2008/125434

(56) Documents cités:
- EP-A- 0 250 170
- WO-A2-2004/037653
- CH-A- 156 551
- DE-C- 392 048
- FR-A- 2 868 402
- JP-A- H03 133 767
- US-A- 1 593 142
- US-A- 3 613 934
- US-A- 5 894 733
- US-A- 6 119 465
- US-A1- 2002 084 277

## Description

La présente invention concerne un dispositif de transport et/ou de stockage comportant une ampoule isolante à double paroi.

L'invention s'applique notamment au domaine du transport et/ou du stockage de produits, plus précisément mais non exclusivement, à celui de produits conservés à très basse température grâce à un fluide cryogénique, tel que de l'azote liquide.

Dans le domaine des récipients pour le transport de gaz liquéfiés, on connaît principalement deux techniques à savoir d'une part les récipients fermés hermétiquement munis d'un système qui permet de contrôler la pression interne et, d'autre part, les récipients non hermétiques auxquels se rapporte plus particulièrement l'invention.

Ces récipients non hermétiques sont utilisés pour le transport et/ou le stockage sous pression atmosphérique de gaz liquéfié, ces récipients étant prévus pour laisser échapper librement les vapeurs de densité supérieure à l'air qui sont produites au fur et à mesure du réchauffement du gaz liquéfié.

Par exemple, un fluide cryogénique comme l'azote liquide peut être transporté dans un récipient isolé thermiquement, encore appelé cryostat, et dépourvu de système assurant l'étanchéité de la fermeture. Toutefois, le récipient doit en contrepartie être maintenu en position verticale afin d'éviter le déversement accidentel de l'azote liquide.

Ce type de récipient est par exemple très largement utilisé pour le transport de matériels biologiques nécessitant une conservation à très basse température.

Or, la plupart des récipients connus et utilisés comme dispositif de transport sont des cryostats comportant une ampoule isolante constituée par deux parois métalliques séparées par du vide et reliées par une bague assurant la liaison entre les extrémités supérieures libres de chacune des parois, au niveau du col de l'ampoule.

Dans ces récipients, la paroi métallique extérieure de l'ampoule isolante constitue donc directement l'emballage externe du dispositif de transport, lequel peut cependant parfois comporter une structure d'emballage supplémentaire à l'intérieur de laquelle est agencé le cryostat métallique.

On comprendra tout d'abord que l'utilisation de matériaux métalliques pour fabriquer des tels cryostats engendre un coût de fabrication élevé qui exclut par conséquent toute utilisation à usage unique.

Ensuite, pour le transport de produits dont la valeur commerciale est parfois très faible, les frais d'expédition générées par l'utilisation de tels cryostats comme dispositifs de transport sont très importants.

D'une part, le poids du cryostat métallique contribue à augmenter le coût du transport et, d'autre part, le rapatriement à vide du conteneur vers le lieu d'origine de l'expédition doit être organisé car les frais à engager pour la restitution sont le plus souvent inférieurs au prix d'achat d'une unité neuve.

Ce système de consigne est une contrainte importante surtout lorsqu'il s'agit d'expéditions lointaines par voie aérienne ou lorsque l'expéditeur doit faire face à de fortes demandes ponctuelles saisonnières régies par des lois biologiques qu'il est difficile de contrarier. C'est notamment le cas pour la reproduction de certaines espèces animales à partir de gamètes ou d'embryons congelés.

De plus, ces cryostats métalliques sont souvent peu stables car ils présentent un fond dont la section est, par comparaison à leur hauteur, relativement réduite. La hauteur des cryostats est notamment déterminée en fonction des cannes portant les produits qui sont destinées à être introduites verticalement dans le volume intérieur du récipient et qui facilitent les transferts entre récipients.

Enfin, malgré l'utilisation de matériaux métalliques, les dispositifs de transport formés par de tels cryostats restent particulièrement vulnérables aux choc(s) et aux chute(s) lors du transport, les risques de détérioration étant accrus par leur manque de stabilité.

En effet, en cas de choc(s) ou de chute(s), les efforts sont, en particulier en l'absence de structure d'emballage, directement reçus par la paroi externe de l'ampoule isolante et transmis à la bague assurant la liaison avec la paroi interne.

De tels efforts provoquent souvent des ruptures de la bague de liaison, or une telle rupture de la bague disposée au niveau du col de l'ampoule est fatale aux produits transportés, car le vide entre les parois disparu, l'ampoule perd alors ses propriétés d'isolation et la conservation à basse température n'est plus assurée.

De surcroît, à ces efforts extérieurs issus des chocs ou des chutes subis par le cryostat, s'ajoutent d'autres efforts de sens opposé, qui sont transmis à la paroi interne par le contenu de l'ampoule, en particulier le fluide cryogénique comme l'azote liquide.

La conjugaison de ces efforts sur les parois interne et externe provoquent la destruction de la bague, ce qui entraîne la perte totale ou partielle du liquide cryogénique de refroidissement par évaporation et aboutit irrémédiablement à la perte du produit transporté ou stocké.

La résistance de la bague, généralement réalisée en matériau composite ou analogue pour éviter de former un pont thermique, n'est pas suffisante pour supporter de tels efforts, notamment de torsion. C'est la raison pour laquelle, on constate de nombreuses ruptures au niveau de la bague de liaison qui constitue l'unique point ou zone de contact entre les parois interne et externe de la double paroi de l'ampoule.

Une solution possible consiste donc à emballer le cryostat dans une structure d'emballage de manière à tenter de le protéger au moins des choc(s) direct(s), cependant une telle solution contribue encore à augmenter tant les coûts de fabrication et d'utilisation de ces cryostats que le poids total transporté.

De plus, le risque de destruction de la bague de liaison n'est pas pour autant supprimé et persiste notamment en cas de choc important ou de chute car les efforts résultants sont directement transmis par la structure d'emballage à la paroi externe métallique du cryostat.

De tels dispositifs de transport ou cryostats métalliques ne donnent donc pas entière satisfaction, en particulier en raison de leurs coûts de fabrication et d'utilisation, de leur vulnérabilité aux choc(s) et aux chute(s) susceptibles de survenir lors du transport et encore de l'exclusion d'un usage unique.

L'état de la technique comprend des dispositifs de transport et/ou de stockage de produits du type cryostat.

FR 2868402 A, par example, concerne un dispositif de suspension d'une ampoule isolante à double paroi comportant un moyen apte à coopérer avec la paroi interne d'une ampoule isolante pour suspendre l'ampoule dans une position verticale.

WO 2004/037653 A2 et JP H03 133767 concernent des dispositifs comportant des structures d'emballage externe, lesquelles comprennent des parois définissant un volume interne à l'intérieur duquel une ampoule isolante est placée.

L'invention propose une nouvelle conception de dispositif de transport et/ou de stockage permettant de remédier notamment aux inconvénients précités de l'état de la technique.

Dans ce but, l'invention propose un dispositif de transport et/ou de stockage de produits, notamment de type cryostat, comportant une structure d'emballage externe comprenant des parois délimitant un volume interne à l'intérieur duquel est agencée une ampoule isolante à double paroi dont le corps est constitué par une paroi externe et une paroi interne délimitant un volume intérieur, l'ampoule comportant un col supérieur délimitant une ouverture supérieure de remplissage, le dispositif comportant des moyens de support de l'ampoule qui comportent des moyens d'accrochage aptes à coopérer avec la seule paroi interne de l'ampoule pour suspendre verticalement l'ampoule par son col de manière que l'ampoule pende librement dans l'espace vide à l'intérieur du volume interne délimité par la structure d'emballage, sans contact entre la paroi externe de l'ampoule et les parois de la structure d'emballage, caractérisé en ce que les moyens de support par suspension de l'ampoule sont constitués par au moins l'une des parois de l'emballage.

Avantageusement, le dispositif de transport comporte une ampoule à double paroi en verre dont le coût de fabrication est, en comparaison aux cryostats à parois métalliques, très faible.

Il est à noter que le choix d'utiliser une telle ampoule à double parois en verre va à l'encontre des préjugés de l'homme du métier qui, confronté au problème de la vulnérabilité aux chocs des cryostats, s'est orienté vers le développement de structure d'emballage renforcée pour leur protection et non pas vers l'utilisation d'ampoule en verre dont il aurait tout lieu de penser que la vulnérabilité est encore plus critique.

Avantageusement, la suspension de l'ampoule par son col par l'intermédiaire de moyens d'accrochage coopérant uniquement avec la paroi interne permet d'obtenir une excellente tenue mécanique d'une telle ampoule à double parois en verre de manière que les risques de destruction de l'ampoule en cas de choc(s) ou de chute(s) soient considérablement réduits.

Grâce à l'accrochage par suspension de l'ampoule, la paroi externe est totalement libre de tout contact, en particulier de contact avec les parois ou le fond de la structure d'emballage, de manière que les risques de rupture du col de l'ampoule et de perte de l'isolation en cas de choc(s) ou de chute(s) sont en grande partie supprimés.

Avantageusement, l'utilisation d'une ampoule à double paroi en verre suspendue permet de réaliser un dispositif de transport de faible coût de fabrication et de faible poids, apte à être utilisé pour un usage unique, et dont la structure d'emballage est par exemple réalisée en carton.

En effet, la structure d'emballage est avantageusement susceptible de subir localement un enfoncement sans que cela induise nécessairement de contact avec l'ampoule dès lors qu'il existe un espace vide formant « tampon » entre la paroi externe ou le fond de l'ampoule et la structure externe d'emballage.

De plus, par comparaison avec une structure métallique de grande rigidité, une telle capacité de déformation limitée de la structure tend encore à réduire les efforts transmis à l'ampoule puisque la structure est susceptible d'en absorber directement au moins une partie par déformation.

Comme le dispositif de transport est destiné à une utilisation unique, le problème de la détérioration éventuelle de la structure d'emballage est alors relatif, l'essentiel étant bien entendu que le cryostat formé par l'ampoule à double paroi en verre soit intact et que le produit transporté soit conservé.

Conformément à l'invention, l'intégration complète des moyens de support et d'accrochage à l'une des parois, comme une paroi amovible formant couvercle, permet de réduire encore le coût de fabrication du dispositif en réduisant le nombre de composants et de proposer un dispositif de transport à usage unique, fiable et de faibles coûts de fabrication et d'utilisation.

Avantageusement, un tel dispositif de transport est plus écologique que les dispositifs de l'état de la technique car il est susceptible d'être fabriqué en tout ou partie à partir de matériaux recyclables.

Selon d'autres caractéristiques de l'invention :
- la paroi de support présente une capacité de déformation élastique déterminée de manière à permettre, notamment en cas de choc(s) ou de chute(s), un mouvement limité de l'ampoule dans le volume interne d'emballage, sans que la paroi externe de l'ampoule suspendue n'entre en contact avec les parois de la structure d'emballage ;
- ladite paroi de support de l'ampoule est susceptible de se déformer élastiquement pour absorber tout ou partie des efforts mécaniques résultant de choc(s) reçu(s) par la structure d'emballage, en particulier en cas de chute du dispositif, de manière à éviter ou à limiter la transmission de tels efforts à l'ampoule ;
- la paroi de support comportant les moyens d'accrochage par suspension de l'ampoule est un couvercle de la structure d'emballage qui est de type polyédrique ou cylindrique ;
- la paroli de support comporte un élément tubulaire qui s'étend au moins en partie à travers l'ouverture supérieure de l'ampoule et qui délimite un orifice débouchant dans le volume intérieur de l'ampoule, et en ce que les moyens d'accrochage sont solidaires de l'élément tubulaire ;
- les moyens d'accrochage sont montés mobiles entre une position escamotée et une position de verrouillage et en ce que le dispositif comporte un organe de commande dont l'introduction verticale vers le bas dans l'orifice de l'élément tubulaire provoque le déplacement des moyens d'accrochage vers la position de verrouillage, l'organe de commande étant apte à bloquer les moyens d'accrochage en position de verrouillage ;
- l'organe de commande comporte à son extrémité supérieure une collerette radiale en dessous de laquelle s'étend verticalement un corps tubulaire comportant au moins un trou pour permettre le passage du fluide cryogénique lors du remplissage du volume intérieur de l'ampoule ;
- le dispositif comporte un organe de fermeture destiné à être introduit verticalement dans le corps tubulaire de l'organe de commande de manière à garantir l'intégrité du dispositif à usage unique ;
- l'organe de fermeture comporte une collerette qui, complémentaire de la collerette de l'organe de commande, est munie sur sa face verticale externe d'une bague annulaire de verrouillage qui est apte à coopérer avec la collerette de l'organe de commande dont la face verticale interne comporte au moins un cran de verrouillage de manière à verrouiller de façon irréversible l'organe de fermeture et l'organe de commande ;
- le dispositif comporte des moyens de positionnement de l'organe de commande aptes à le maintenir en position centrale et à assurer la liaison mécanique entre l'organe et la paroi interne de manière que les efforts en cas de choc ou de chute se répartissent sur l'ensemble de la paroi interne ;
- le dispositif comporte des moyens d'absorption susceptibles d'absorber un fluide cryogénique, tel que de l'azote liquide, et les moyens d'absorption sont agencés dans tout ou partie du volume intérieur de l'ampoule;
- les moyens d'absorption constituent les moyens de positionnement de l'organe de commande.

D'autres caractéristiques et avantages de l'invention apparaîtront à la lecture de la description détaillée qui suit pour la compréhension de laquelle on se reportera aux dessins annexés, donnés à titre d'exemples non limitatifs, et dans lesquels :
- la figure 1 est une vue éclatée qui représente un exemple de réalisation d'un dispositif de transport et/ou de stockage selon l'invention, avant assemblage et montage des principaux composants ;
- les figures 2 et 3 sont respectivement des vues en perspective qui représentent, la seconde en coupe axiale par un plan vertical, le couvercle formant les moyens de support selon l'invention et qui est muni des pattes d'accrochage pour la suspension de l'ampoule ;
- la figure 4 est une vue en coupe axiale qui représente respectivement les organes de commande et de fermeture du dispositif en position assemblée et en position verrouillée ;
- la figure 5 est une vue en coupe axiale qui représente le dispositif de transport de la figure 1 en position montée finale.

Dans la description et les revendications, on utilisera à titre non limitatif et par convention, les termes "supérieur" et "inférieur" et les orientations "longitudinale", "verticale" et "transversale" pour désigner respectivement des éléments selon les définitions données dans la description et par rapport au trièdre (L, V, T) représenté sur les figures.

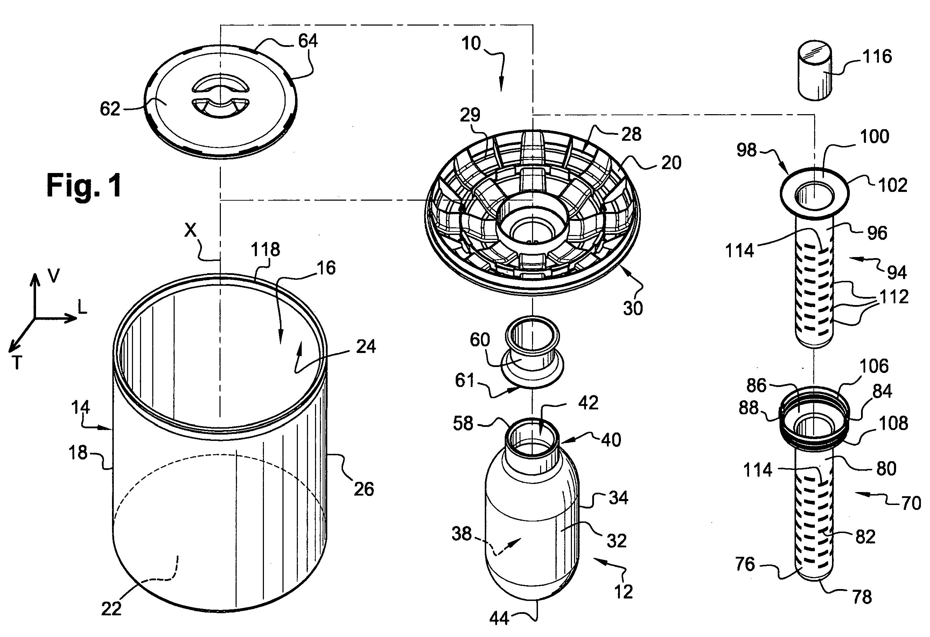

On a représenté à la figure 1, un exemple de réalisation du dispositif de transport et/ou de stockage 10 selon l'invention.

En effet, le dispositif 10 selon l'invention est susceptible d'être utilisé comme dispositif de transport et/ou comme dispositif de stockage d'un produit, en particulier conservé au moyen d'un fluide cryogénique.

Avantageusement, le dispositif 10 selon l'invention n'est pas exclusivement destiné au transport et/ou au stockage de produits biologiques ou autres mais est encore susceptible d'être utilisé pour le transport et/ou le stockage du fluide cryogénique lui-même.

Avantageusement, le dispositif 10 est apte à être mis en oeuvre pour l'une et l'autre de ces utilisations, c'est-à-dire pour réaliser du stockage d'un produit ou d'un gaz liquéfié, tel qu'un fluide cryogénique, avant et/ou après son transport.

Le dispositif de transport et/ou de stockage 10 comporte principalement une ampoule isolante 12 à double paroi, avantageusement réalisées en verre, et une structure d'emballage externe 14.

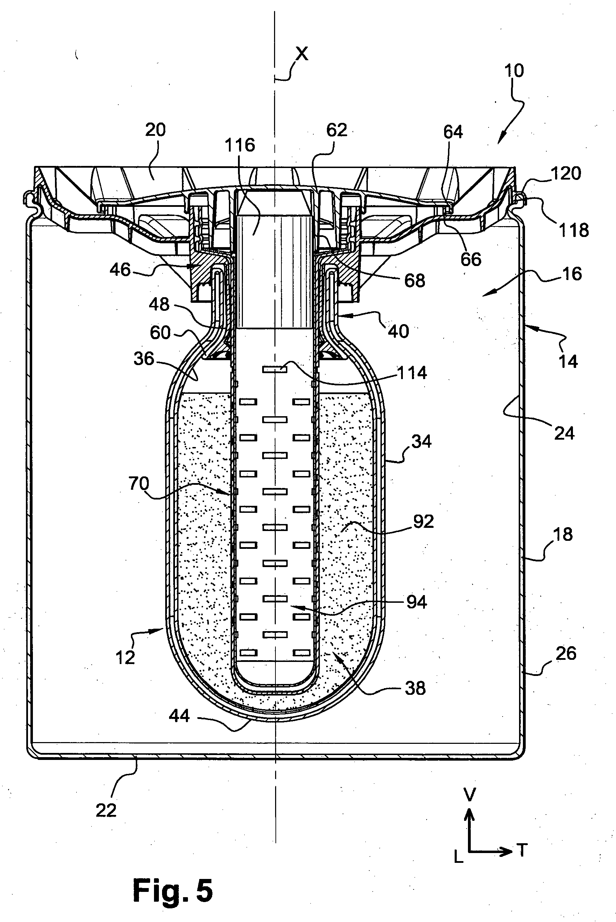

La structure d'emballage externe 14 est constituée par un ensemble de parois qui délimitent un volume interne 16 à l'intérieur duquel l'ampoule isolante 12 est agencée en position montée du dispositif de transport et/ou de stockage 10, telle qu'illustrée à la figure 5.

Dans l'exemple de réalisation, la structure d'emballage 14 est un conteneur se présentant sous la forme d'un baril, d'un tonneau ou encore d'un fût, qui est ici globalement cylindrique et de section circulaire.

Bien entendu, la structure d'emballage 14 est susceptible de prendre encore de très nombreuses formes, par exemple la structure d'emballage est, en variante, de type polyédrique.

De préférence, la structure d'emballage 14 comporte un fût, d'axe principal vertical X, qui comporte une paroi cylindrique 18, une paroi horizontale supérieure formée par un couvercle amovible 20 et une paroi horizontale inférieure 22 formant le fond du fût.

L'axe principal vertical X constitue avantageusement un axe de symétrie global pour l'ensemble des composants du dispositif de transport et/ou de stockage 10.

Dans la structure d'emballage 14, la paroi 18 du fût délimite une face cylindrique interne 24 (voir figure 5) et une face cylindrique externe 26, et le couvercle circulaire 20 comporte une face horizontale supérieure 28 et un face horizontale inférieure 30.

L'ampoule isolante 12 à double paroi comporte un corps 32 constitué par une paroi externe 34 et une paroi interne 36 qui sont sensiblement parallèles et séparées par du vide.

La paroi interne 36 délimite un volume intérieur 38 de l'ampoule 12 (voir figure 5).

L'ampoule 12 comporte un col supérieur 40 délimitant une ouverture supérieure 42, notamment destinée à permettre le remplissage du volume intérieur 38 de l'ampoule 12 en fluide cryogénique. L'ampoule 42 comporte encore, verticalement à l'opposé du col 40, un fond 44 qui est ici globalement hémisphérique.

Avantageusement, le dispositif 10 comporte des moyens de support 46 de l'ampoule 12 qui comportent des moyens d'accrochage 48 aptes à coopérer, directement ou indirectement, avec la seule paroi interne 36 de l'ampoule pour suspendre verticalement l'ampoule 12 par son col 40.

Ainsi, en position montée (figure 5) du dispositif 10, l'ampoule 12 pend librement dans le vide à l'intérieur du volume interne 16 délimité par la structure d'emballage 14, c'est-à-dire sans contact entre la paroi externe 34 de l'ampoule 12 et les parois de la structure d'emballage 14, en particulier la paroi interne 24 ou la face supérieure du fond 22.

Conformément à l'invention, les moyens de support 46 par suspension de l'ampoule 12 sont constitués par au moins l'une des parois de la structure d'emballage 14.

Avantageusement, les moyens de support 46 sont directement formés par la structure d'emballage 14 externe sans qu'il soit nécessaire de prévoir une structure porteuse intermédiaire comportant par exemple des armatures.

De préférence, la paroi formant les moyens de support 46 est constituée par le couvercle 20 de la structure d'emballage 14, ici amovible et destiné à être rapporté solidairement sur le fût cylindrique. Les moyens d'accrochage 48 par suspension de l'ampoule 12 sont avantageusement intégrés au couvercle 20 de manière à former un élément monobloc, notamment susceptible d'être fabriqué par moulage.

Bien entendu, la paroi de support 46 selon l'invention peut être constituée par l'une quelconque des parois de la structure d'emballage 14, par exemple par l'une quelconque des parois d'une caisse dans le cas d'une structure parallélépipédique.

Avantageusement, le couvercle 20 formant la paroi de support 46 selon l'invention présente encore une capacité de déformation élastique déterminée et définie de manière à permettre, notamment en cas de choc(s) ou de chute(s), un mouvement limité de l'ampoule 12 dans le volume interne 16 d'emballage, et de telle sorte que la paroi externe 34 de l'ampoule 12 suspendue n'entre pas en contact avec les parois 22, 24, de la structure d'emballage 14.

De préférence, le couvercle 20 formant ladite paroi de support 46 de l'ampoule 12 est de plus susceptible de se déformer élastiquement localement.

Avantageusement, le couvercle 20 comporte une zone annulaire de déformation élastique 29 qui est située sur la périphérie radiale du couvercle 20. Cette zone de déformation élastique est susceptible d'absorber tout ou partie des efforts mécaniques résultant de choc(s) reçu(s) par la structure d'emballage 14, notamment la paroi externe 26 ou le fond 22, en particulier en cas de chute verticale du dispositif 10.

Une telle zone 29 du couvercle 20 ayant une capacité de déformation élastique déterminée permet d'éviter, ou à tout le moins de limiter, la transmission à la paroi interne 36 de l'ampoule 12 des efforts mécaniques imputables à de tels chocs sur la structure d'emballage 14 ou à une chute du dispositif de transport et/ou de stockage 10.

En variante, le couvercle 20 est réalisé en plusieurs parties, par exemple une première partie centrale à laquelle l'ampoule 12 est suspendue, et une deuxième partie périphérique de moindre rigidité apte à se déformer élastiquement et qui, disposée radialement autour de la partie centrale porteuse, est susceptible d'assurer la liaison élastique avec le fût de la structure d'emballage 14.

Une telle deuxième partie est par exemple constituée par un soufflet en élastomère assurant une fonction d'amortisseur et/ou de filtre pour limiter la transmission des efforts mécaniques entre la structure d'emballage 14 et l'ampoule 12.

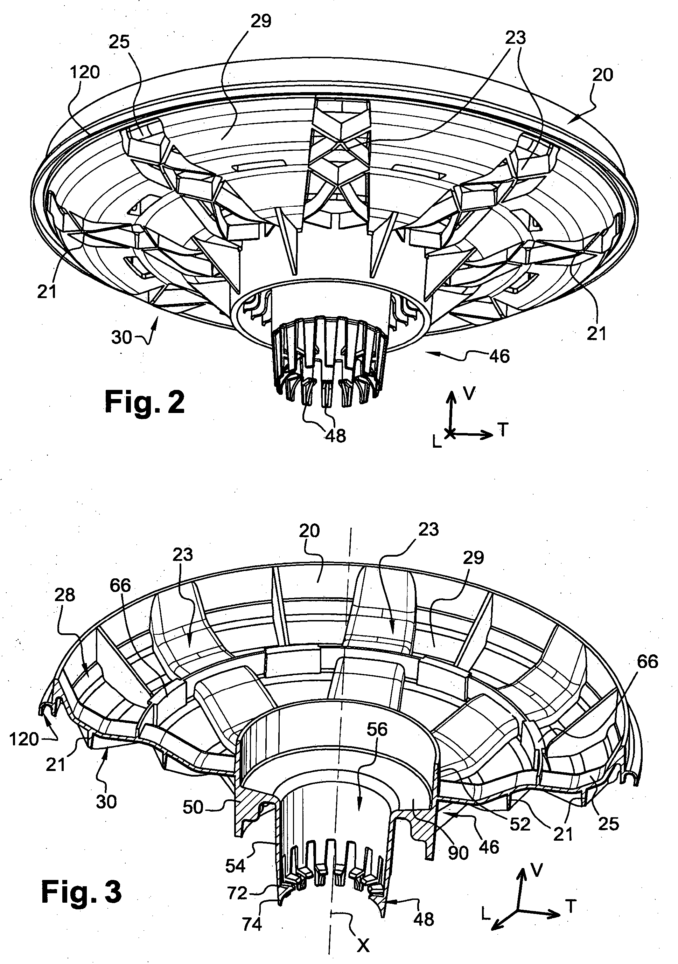

On décrira ci-après un exemple de réalisation préféré d'un couvercle 20 formant la paroi de support 46 de l'ampoule 12 selon l'invention, qui est plus particulièrement illustré aux figures 2 et 3.

De préférence, le couvercle 20 est réalisé en une seule pièce en un matériau élastomère présentant une capacité de déformation élastique déterminée suffisante pour absorber les efforts en cas de chute ou de choc.

Le couvercle 20 doit cependant être à même de supporter le poids de l'ensemble au cours du transport et notamment celui de l'ampoule 12 une fois cette dernière remplie en fluide cryogénique, c'est la raison pour laquelle la capacité de déformation élastique est déterminée suivant les applications.

Par conséquent, la capacité de déformation élastique du couvercle 20 est notamment fonction du poids de l'ampoule, de l'espace vide restant autour de l'ampoule 12 dans le volume 16 qui détermine le mouvement ou débattement possible de l'ampoule 12 sans toutefois que l'ampoule 12 ne puisse pour autant entrer en contact avec la structure 14.

Avantageusement, le couvercle 20 comporte des moyens de renfort, tels que des nervures 21, aptes à rigidifier localement le couvercle 20 pour supporter le poids de l'ampoule 12 suspendue tout en absorbant les efforts en cas de choc(s) ou de chute(s).

De préférence, le couvercle 20 comporte des nervures 21 qui sont réalisées sous la forme de bras 23 s'étendant radialement du bord extérieur 25 vers le centre du couvercle et qui sont par exemple répartis en "étoile", soit angulairement de manière régulière.

Avantageusement, le couvercle 20 intégrant les moyens de support 46 comporte un élément tubulaire central 50, ici de section circulaire. L'élément tubulaire 50 comporte un tronçon supérieur 52 et un tronçon inférieur 54 qui, en position montée, s'étendent respectivement à l'extérieur et au dessus du col 40 de l'ampoule 12, et au moins en partie à travers l'ouverture supérieure 42 de l'ampoule 12.

L'élément tubulaire central 50 délimite un orifice 56 débouchant dans le volume intérieur 38 de l'ampoule 12, laquelle s'évase progressivement vers le bas à partir du bord supérieur 58 qui constitue l'unique zone de raccordement entre les parois externe 34 et interne 36.

Avantageusement, le dispositif 10 comporte un manchon annulaire 60 qui, en position montée, est interposé radialement entre l'élément tubulaire 50 comportant les moyens d'accrochage 48 et la paroi interne 36 de l'ampoule 12 située au voisinage du col évasé 40 dont il épouse la forme.

Le dispositif 10 comporte un bouchon 62 de fermeture qui est susceptible d'obturer l'orifice 56 de l'élément tubulaire 50 que comporte le couvercle 20.

De préférence, le bouchon 62 est rapporté sur le couvercle 20 par un montage de type à baïonnette et comporte à cet effet circonférentiellement des ergots 64 destinés à coopérer avec des encoches 66 du couvercle 20.

De préférence, les encoches 66 sont réparties circonférentiellement autour de l'orifice 56 sur la face supérieure 28 du couvercle 20.

Avantageusement, le bouchon 62 comporte une jupe annulaire 68 qui, s'étendant verticalement, est centrée sur l'axe vertical X du dispositif 10.

Avantageusement, le bouchon 62 est d'un diamètre inférieur au couvercle 20 et contribue, en position montée, à rigidifier la partie centrale du couvercle 20 comportant l'élément tubulaire 50 auquel est suspendue l'ampoule 12, la zone annulaire s'étendant radialement entre les encoches 66 et le bord du couvercle 20 formant ladite zone déformable élastiquement 29 destinée à absorber les efforts en cas de chocs.

Le dispositif 10 comporte un organe de commande 70 dont l'introduction verticale vers le bas dans l'orifice 56 de l'élément tubulaire 50 est apte à provoquer le déplacement des moyens d'accrochage 48 vers la position de verrouillage.

De préférence, les moyens d'accrochage 48 sont constitués par des pattes destinées, après montage, à assurer la liaison entre l'ampoule 12 et l'élément tubulaire 50 solidaire du couvercle 20.

Les pattes 48 sont montées mobiles entre une position escamotée et une position de verrouillage et sont par exemple réparties circonférentiellement de manière régulière à l'extrémité inférieure du tronçon 54 de l'élément tubulaire 50.

Chaque patte 48 présente une section en "L" et comporte un bras de commande 72 qui s'étend horizontalement, radialement à l'intérieur de l'élément tubulaire 50, et un bras de verrouillage 74 formant crochet qui s'étend verticalement vers le bas, lorsque les moyens d'accrochage 48 sont en position escamotée telle qu'illustrée à la figure 2 ou 3.

Le pivotement des pattes d'accrochage 48 de la position escamotée à la position de verrouillage est, provoqué par l'introduction verticale vers le bas de l'organe de commande 70, à travers l'orifice supérieur 56 de l'élément tubulaire 50.

L'organe de commande 70 comporte un corps tubulaire 76 de diamètre inférieur à celui du tronçon inférieur 54 de l'élément tubulaire 50 de manière que, lors de l'introduction axiale de l'organe de commande 70, le corps tubulaire 76 coopère avec les bras de commande 72 des pattes 48 et provoque un pivotement de 45° des pattes de la position escamotée vers la position de verrouillage.

Comme on peut mieux le voir sur la figure 5, le corps tubulaire 76 de l'organe de commande 70 immobilise alors les pattes 48 en position de verrouillage de sorte que l'organe de commande 70 constitue avantageusement un moyen de blocage des pattes 48 dans la position de verrouillage.

En effet, les bras de commande 72 s'étendent alors verticalement le long d'une paroi cylindrique externe 80 du corps tubulaire 76 de l'organe de commande 70.

De préférence, les pattes d'accrochage 48 s'étendent à l'oblique en position de verrouillage de manière à venir en appui contre une face 61 en vis-à-vis du manchon 60, qui est solidaire de la paroi interne 36 au voisinage du col 40.

En position montée, le manchon 60 est interposé radialement entre la paroi interne 36 de l'ampoule 12 et la surface cylindrique externe du tronçon inférieur 54 de l'élément tubulaire 50 pénétrant dans l'ampoule 12 au niveau du col 40.

En variante, le dispositif 10 ne comporte pas de manchon et les pattes 48 coopèrent directement en position de verrouillage avec la portion évasée de la paroi interne 36 du col 40 de l'ampoule 12.

De préférence, l'organe de commande 70 comporte un corps tubulaire 76 dont l'extrémité inférieure 78 est fermée par un fond, en variante ouverte, et dont la paroi cylindrique 80 est pourvue d'au moins un trou 82 pour permettre le passage du fluide cryogénique, notamment lors du remplissage.

Avantageusement, le corps tubulaire 76 comporte une pluralité de trous 82 qui sont répartis circonférentiellement autour de la paroi cylindrique 80 et verticalement sur plusieurs rangs superposés entre lesquels les trous 82 sont disposés en quinconce d'un rang à l'autre.

L'organe de commande 70 comporte à son extrémité supérieure une collerette supérieure 84 en "L" comportant une paroi horizontale 86 qui s'étend radialement vers l'extérieur à partir de l'extrémité supérieure du corps tubulaire 76 de l'organe de commande 70 et une paroi verticale 88.

En position montée (figure 5), la collerette radiale 84 de l'organe de commande 70 est en appui par l'intermédiaire de sa paroi 86 contre un épaulement 90 complémentaire formé par le raccordement du tronçon supérieur 52 et du tronçon inférieur 54 de l'élément tubulaire 50.

De préférence, l'organe de commande 70 s'étend verticalement à travers le volume intérieur 38 mais sans contact direct entre son corps 76 ou son extrémité 78 et la paroi interne 36 de l'ampoule 12.

Avantageusement, le dispositif 10 comporte des moyens de positionnement 92 qui sont aptes à maintenir l'organe de commande 70 lors du transport, ici en position centrale.

Les moyens de positionnement 92 assurent en particulier une liaison mécanique entre le corps tubulaire 76 de l'organe de commande 70 et la paroi interne 36 de l'ampoule 12 de manière que les efforts qui sont susceptibles d'être transmis en cas de choc ou de chute soient alors avantageusement réparties sur l'ensemble de la paroi interne 36 de l'ampoule 12 et non uniquement sur la portion de la paroi interne 36 située au niveau du col 40 et du manchon 60.

Selon une première solution non représentée, les moyens de positionnement 92 sont constitués par un anneau dont le diamètre extérieur correspond au diamètre interne de l'ampoule 12 et dont le diamètre interne correspond au corps tubulaire 76 de l'organe de commande 70.

Avantageusement, l'anneau de positionnement de l'organe 70 est réalisé en mousse, telle qu'une mousse dite de filtration dont la structure aérée n'affecte pas ou très peu le volume intérieur 38 de l'ampoule 12.

Un tel anneau de positionnement est par exemple préféré lorsque l'ampoule 12 du dispositif 10 est destinée à être utilisée comme un réservoir de transport et/ou de stockage d'un fluide cryogénique qui constitue alors directement le produit transporté et/ou stocké.

Selon une deuxième solution illustrée à la figure 5, les moyens de positionnement sont constitués par des moyens susceptibles d'absorber le fluide cryogénique, par exemple de l'azote liquide.

Avantageusement, les moyens de positionnement et d'absorption 92 sont agencés, préalablement à l'introduction de l'organe de commande 70, dans tout ou partie du volume intérieur 38 de l'anipoule 12 et sont par exemple constitués par de la mousse polyuréthane ou de la mousse phénolique, en flocons ou expansée.

Grâce à leur capacité d'absorption, les moyens 92 adsorbent le fluide cryogénique lors du remplissage, comme un liquide l'est par une éponge, et le fluide n'est dès lors plus susceptible de se répandre hors de l'ampoule 12 au cours du transport.

Avantageusement, un tel dispositif de transport et/ou de stockage 10 de produit n'est alors plus concerné par les restrictions réglementaires imposées, en particulier pour le fret aérien, au conteneur de type cryostat comportant des matières dangereuses susceptible de se déverser et le dispositif 10 est donc susceptible d'être transporté comme un emballage quelconque, sans restrictions particulières.

Selon un mode de réalisation préféré de l'invention, le dispositif 10 comporte un organe de fermeture 94 qui est destiné à être introduit verticalement dans le corps tubulaire 76 de l'organe de commande 70.

De préférence, l'organe de fermeture 94 est susceptible d'obturer les trous 82 pour limiter la circulation du fluide cryogénique à travers l'organe de commande 70 et le contact éventuel avec le produit transporté et/ou stocké.

En effet, l'organe de fermeture 94 constitue avantageusement un tube porteur à l'intérieur duquel est disposé le produit à transporter ou à stocker. En variante, le produit est porté par une canne conventionnelle introduite à l'intérieur de l'organe de fermeture 94.

L'organe de fermeture 94 comporte un corps tubulaire 96 une collerette 98 qui, complémentaire de la collerette 84 de l'organe de commande 70, est principalement constituée d'une paroi globalement horizontale 100 qui est munie à son extrémité radiale externe d'une bague annulaire de verrouillage 102.

De préférence, la bague annulaire de verrouillage 102 de la collerette 98 est apte à coopérer avec au moins un cran de verrouillage 104 que comporte la face verticale interne de la paroi verticale 88 de la collerette 84 de l'organe de commande 70 de manière à verrouiller ensemble de façon irréversible l'organe de fermeture 94 et l'organe de commande 70 afin de garantir l'intégrité du dispositif à usage unique en interdisant toute réutilisation ultérieure.

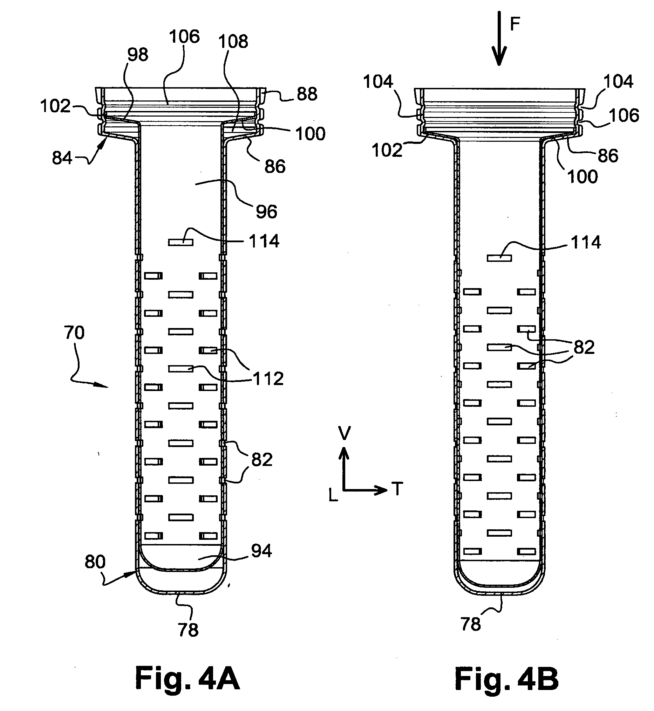

Selon l'exemple de réalisation illustré aux figures 4A et 4B, l'organe de commande 70 comporte une face verticale crantée comprenant au moins un bourrelet supérieur 106 et un bourrelet inférieur 108 qui déterminent respectivement un premier cran 110 situé entre les bourrelets supérieur et inférieur et un second cran qui, situé en dessous du bourrelet inférieur 108, correspond audit cran 104.

Comme illustré à la figure 4A, l'organe de fermeture 94 est susceptible d'occuper une première position, dite d'assemblage, dans laquelle la bague de verrouillage 102 de l'organe de fermeture 94 est introduite dans le premier cran 110 de la collerette 84 de l'organe de commande 70.

Comme illustré à la figure 4B, l'organe de fermeture 94 est encore susceptible d'occuper une deuxième position, dite de verrouillage, dans laquelle la bague 102 est introduite dans le second cran 104, dit de verrouillage, de l'organe de commande 70.

De préférence, l'organe de fermeture 94 comporte des trous 112 qui, en position d'assemblage, sont au moins en partie en coïncidence avec les trous 82 de passage de l'organe de commande 70 destinés à permettre le remplissage en fluide cryogénique du volume intérieur 38 de l'ampoule 12 à travers l'organe de commande 70.

Avantageusement, en position de verrouillage, les trous 82 de l'organe de commande 70 sont au moins en partie obturés par le corps 96 de l'organe de fermeture 94 de manière à interdire toute adjonction ultérieure de fluide cryogénique afin de garantir à l'utilisateur final l'intégrité du dispositif et son utilisation à usage unique.

Avantageusement, les moyens d'absorption 92 assurent dans le dispositif 10 d'une part le positionnement de l'organe 70 et, d'autre part, la liaison mécanique entre ce dernier et la paroi interne 36 de l'ampoule 12.

L'organe de fermeture 94 et l'organe de commande 70 comportent des moyens de ventilation 114 destiné, en position de verrouillage, à permettre l'évacuation des gaz libérés au fur et à mesure par le fluide cryogénique lors du transport et/ou du stockage.

Avantageusement, les moyens de ventilation 114 à travers l'organe de fermeture 94 et l'organe de commande 70 sont constitués par au moins un orifice de ventilation 114 qui est formé par au moins l'un des trous 82, 112 de chaque organe 70 et 94 situé dans la partie supérieure de chacun d'eux.

Les orifices supérieurs de ventilation 114 permettent l'évacuation des gaz dégagés par le fluide cryogénique qui s'échappent ainsi du volume intérieur 38 vers l'extérieur en passant par l'ouverture 42 du col 40 de l'ampoule 12.

Les orifices de ventilation 114 des organes 70 et 94 ne sont pas en coïncidence axiale lorsque l'ensemble est en position assemblée illustrée à la figure 4A, mais lorsque les organes 70 et 94 sont en position verrouillée illustrée à la figure 4B.

De préférence, la partie supérieure tubulaire de l'organe de fermeture 94 est susceptible de recevoir un bouchon 116, dit interne, qui autorise la ventilation de l'ampoule en permettant l'évacuation vers l'extérieur des gaz produits par le fluide cryogénique.

Avantageusement, le bouchon 116 est encore susceptible de limiter le déversement de fluide cryogénique hors de l'ampoule 12 dans l'éventualité où celui-ci aurait été introduit en excès, volontairement ou non, par rapport à la capacité maximale d'absorption des moyens 92.

Un tel bouchon 116 permet d'une part de limiter les échanges thermiques entre le volume intérieur 38 de l'ampoule 12 et l'extérieur et, d'autre part, d'éviter la formation de condensation au voisinage du col 40 du fait des différences de température entre l'intérieur et l'extérieur de l'ampoule.

On décrira maintenant les principales étapes nécessaires à la mise en oeuvre du dispositif de transport et/ou de stockage 10 pour parvenir à la position montée finale illustrée à la figure 5.

De préférence, l'ampoule 12 comporte, d'une part, des moyens de positionnement 92 de type absorbant qui sont introduits à l'intérieur du volume 38 et, d'autre part, le manchon 60 monté à l'intérieur du col 40.

Le dispositif de transport 10 est susceptible d'être pré-monté en introduisant notamment l'élément tubulaire 50 du couvercle dans l'ouverture supérieure 42 de l'ampoule 12 et en procédant au verrouillage.

Une fois l'élément tubulaire 50 introduit, les pattes 48 s'étendent à l'intérieur de l'ampoule 12 mais se trouvent en position escamotée, c'est l'introduction verticale de l'organe de commande 70 à travers l'orifice de passage 56 du couvercle 20 qui provoque le pivotement des pattes 48 vers leur position de verrouillage.

L'organe de commande 70 introduit, le couvercle 20 et l'ampoule 12 sont alors solidaires l'un de l'autre par l'intermédiaire des pattes 48 qui sont maintenues en position verrouillée par l'organe de commande 70.

De préférence, l'organe de commande 70 est entièrement introduit dans l'ampoule 12, c'est-à-dire jusqu'à ce que sa collerette 84 soit reçue dans le tronçon supérieur 52 de l'élément tubulaire 50 et que la paroi 86 coopère avec l'épaulement 90.

De préférence, l'organe de fermeture 94 est monté dans l'organe de commande 70 après ces premières opérations d'assemblage, en particulier le verrouillage des moyens d'accrochage 48.

En variante, l'organe de fermeture 94 est préalablement assemblé avec l'organe 70 afin d'être monté simultanément avec ce dernier de manière analogue à ce qui vient d'être décrit.

De préférence, le couvercle 20 est ensuite monté solidaire du fût 18 qui comporte à cet effet un bord supérieur 118 destiné à coopérer avec un bord complémentaire 120 du couvercle 20.

Avantageusement, le bord supérieur 118 du fût forme une partie mâle destinée à être emmanchée en force dans une rainure annulaire complémentaire que comporte le bord 120 du couvercle 20.

La coopération de formes entre les bords 118 et 120 du fût 18 et du couvercle 20 est déterminée de manière que le couvercle 20 reste solidaire du fût formant la structure d'emballage externe 14, indépendamment de la charge exercée sur lui en son centre par l'ampoule 12.

Bien entendu de nombreuses variantes sont donc envisageables pour assurer la liaison entre le couvercle 20 et le bord supérieur 118 du fût.

L'assemblage du couvercle 20 avec le fût de la structure d'emballage externe 14 étant réalisé, l'ampoule 12 est alors suspendue et s'étend verticalement dans le volume interne 16.

On procède ensuite au remplissage du volume intérieur 38 de l'ampoule 12, par le dessus, en versant le fluide cryogénique par l'ouverture supérieure délimitée par la collerette 98 de l'organe de fermeture 94.

Le fluide cryogénique introduit en quantité déterminée est avantageusement intégralement absorbé par les moyens d'absorption 92 prévus à cet effet.

Une fois le remplissage achevé, les produits à transporter et/ou à stocker sont par exemple introduits directement dans le volume délimité par l'organe de fermeture 94 qui constitue alors un tube porteur.

En variante, les produits sont portés par une canne de support (non représentée) qui est introduit verticalement de haut en bas à l'intérieur de l'organe de fermeture 94.

Avantageusement, le dispositif de transport et/ou de stockage 10 est susceptible d'être fermé pour permettre l'expédition du produit.

Avantageusement, la jupe 68 du bouchon 62 constitue une partie d'actionnement apte à coopérer avec la paroi horizontale 100 de la collerette 98 de l'organe de fermeture 94 pour provoquer son déplacement de la position d'assemblage vers la position de verrouillage.

Lorsque le bouchon 62 est introduit verticalement vers le bas en vue de la fermeture du dispositif 10, l'extrémité inférieure de la jupe 68 exerce alors un effort de fermeture F (figure 4B) sur la collerette 98 de l'organe 94 qui provoque sa descente dans l'organe de commande 70 et le passage de la bague de verrouillage 102 du premier cran 110 au second cran 104.

Avantageusement, le bouchon 62 est simultanément ou successivement entraîné en rotation par l'intermédiaire de la poignée que comporte sa face supérieure pour achever la fermeture suivant le montage à baïonnette.

En effet, chaque encoche 66 comporte avantageusement un chemin étagé (non représenté) dans lequel s'engage chaque ergot 64 lors de la rotation du bouchon 62 et qui provoque automatiquement un mouvement de descente de la jupe 68 lorsque les ergots 64 du bouchon 62 sont introduits dans les encoches 66 complémentaires du couvercle 20 de support de la structure d'emballage 14.

Le dispositif de transport et/ou de stockage 10 est ainsi apte à être transporté en étant maintenu en position verticale, le couvercle 20 en haut ou apte à permettre le stockage du produit pendant une durée déterminée par la quantité de fluide cryogénique.

Avantageusement, la mise en oeuvre de l'organe de fermeture 94 ou encore du bouchon 116 n'interdit aucunement de procéder à un contrôle du produit transporté ou stocké, lequel est notamment susceptible d'être opéré par les services des douanes.

Selon une variante non représentée, le dispositif de transport 10 comporte uniquement un organe de commande 70.

L'organe de commande 70 constitue alors directement le tube porteur là l'intérieur duquel sont logés les produits à transporter ou à stocker ou la canne de support comportant les produits.

Comme précédemment, la partie supérieure du corps tubulaire 76 de l'organe 70 est susceptible de recevoir le bouchon 116 qui permet l'évacuation des gaz produits par le fluide cryogénique hors de l'ampoule, de limiter les échanges thermiques et encore de limiter le déversement de fluide cryogénique hors de l'ampoule 12.

Grâce à l'invention, le dispositif de transport 10 comporte un nombre réduit de composants, de faible coût de fabrication permettant une utilisation à usage unique.

Avantageusement, la paroi externe 34 est libre de tout contact et les efforts mécaniques transmis en cas de choc(s) ou de chute(s) ne s'exercent que sur la seule paroi interne 36.

En effet, les efforts mécaniques provoqués par des chocs ou une chute sont le cas échéant transmis à la paroi interne 36 de l'ampoule 12, d'une part, par les moyens d'accrochage 48 qui coopèrent, directement ou avec interposition du manchon 60, avec à ladite paroi interne 36 et, d'autre part, par le corps tubulaire 76 via les moyens de positionnement 92, absorbants ou non.

Grâce à la répartition des efforts sur l'ensemble de la paroi interne 36, on supprime notamment le risque de rupture du col 40 au niveau de la zone de raccordement 58 entre les parois externe 34 et interne 36 de l'ampoule isolante 12 à double paroi en verre.

Un tel dispositif 10 selon l'invention est avantageusement utilisé pour le transport et/ou le stockage de produits biologiques, tels que des gamètes ou des embryons, mais encore à celui de tous produits devant être conservés à très basse température grâce à un fluide cryogénique comme l'azote liquide pendant une durée déterminée, au moins suffisante à leur acheminement dans le cas du transport.

Les produits transportés ou stockés sont donc encore susceptibles d'être des produits tels que des virus, des vaccins, des prélèvements médicaux destinés à être analysés etc.

De préférence, le dispositif 10 selon l'invention est encore susceptible d'être utilisé pour réaliser le transport et/ou le stockage d'un fluide cryogénique, tel que de l'azote liquide, le volume intérieur de l'ampoule 12 constituant alors intégralement un réservoir pour le fluide formant lui-même le produit.

Avantageusement, le dispositif 10 ne comporte pas de moyens de positionnement 92 de type absorbant lorsqu'il est utilisé comme réservoir à des fins de transport ou de stockage d'un tel fluide cryogénique.

Tant que la quantité de fluide cryogénique contenue dans l'ampoule 12 est suffisante pour assurer la conservation du produit, le dispositif 10 est susceptible d'être utilisé pour réaliser un stockage de celui-ci, notamment en attendant son utilisation.

## Revendications

1. Un dispositif (10) de transport et/ou de stockage de produits, notamment du type cryostat, comportant une structure d'emballage externe (14) comprenant des parois délimitant un volume interne (16) à l'intérieur duquel est agencée une ampoule (12) isolante à double paroi dont le corps (32) est constitué par une paroi externe (34) et une paroi interne (36) délimitant un volume intérieur (38), l'ampoule (12) comportant un col supérieur (40) délimitant une ouverture supérieure (42) de remplissage, le dispositif (10) de plus comportant des moyens de support (46) de l'ampoule qui comportent des moyens d'accrochage (48) aptes à coopérer directement ou indirectement avec la seule paroi interne (36) de l'ampoule (12) pour suspendre verticalement l'ampoule (12) par son col (40) de manière que l'ampoule (12) pende librement dans l'espace vide à l'intérieur du volume interne (16) délimité par la structure d'emballage externe (14, 18, 22), sans contact entre la paroi externe (34) de l'ampoule (12) et les parois (24, 22) de la structure d'emballage externe (14), le dispositif **caractérisé en ce que** les moyens de support (46) de l'ampoule par suspension de l'ampoule (12) comprennent une paroi de support (20), laquelle est au moins l'une des parois de la structure d'emballage externe (14).

2. Le dispositif (10) selon la revendication 1, **caractérisé en ce que** la paroi de support (20, 46) de l'ampoule (12) présente une capacité de déformation élastique déterminée de manière à permettre un mouvement limité de l'ampoule (12) dans le volume interne (16) défini par la structure d'emballage externe (14), sans que la paroi externe (34) de l'ampoule (12) suspendue n'entre en contact avec les parois de la structure d'emballage externe (14).

3. Le dispositif (10) selon l'une des revendications 1 ou 2, **caractérisé en ce que** la paroi de support (20, 46) est susceptible de se déformer élastiquement pour absorber tout ou partie des efforts mécaniques résultant de choc(s) reçu(s) par la structure d'emballage externe (14), en particulier en cas de chute du dispositif, de manière à éviter ou à limiter la transmission de tels efforts à l'ampoule (12).

4. Le dispositif (10) selon l'une quelconque des revendications précédentes, **caractérisé en ce que** la paroi de support (20) comporte les moyens d'accrochage (48) par suspension de l'ampoule (12) et la paroi de support (20) est un couvercle de la structure d'emballage externe (14) qui est de type polyédrique ou cylindrique.

5. Le dispositif (10) selon l'une quelconque des revendications précédentes, **caractérisé en ce que** la paroi de support (20) comporte un élément tubulaire (50) qui s'étend au moins en partie à travers l'ouverture supérieure (42) de remplissage de l'ampoule (12) et qui délimite un orifice (56) débouchant dans le volume intérieur (38) de l'ampoule (12), et **en ce que** les moyens d'accrochage (48) sont solidaires de l'élément tubulaire (50).

6. Le dispositif (10) selon la revendication 5, **caractérisé en ce que** les moyens d'accrochage (48) sont montés mobiles entre une position escamotée et une position de verrouillage et **en ce que** le dispositif (10) comporte un organe de commande (70) dont l'introduction verticale vers le bas dans l'orifice (56) de l'élément tubulaire (50) provoque le déplacement des moyens d'accrochage (48) vers la position de verrouillage, l'organe de commande (70) étant apte à bloquer les moyens d'accrochage (48) en position de verrouillage.

7. Le dispositif (10) selon la revendication 6, **caractérisé en ce que** le dispositif (10) comporte un organe de fermeture (94) destiné à être introduit verticalement dans l'organe de commande (70) de manière à garantir l'intégrité du dispositif à usage unique.

8. Le dispositif (10) selon la revendication 7, **caractérisé en ce que** l'organe de fermeture (94) comporte une collerette (98) qui, complémentaire de la collerette (84) de l'organe de commande (70), est munie sur sa face verticale externe d'une bague annulaire de verrouillage (102) qui est apte à coopérer avec la collerette de l'organe de commande (70) dont la face verticale interne comporte au moins un cran de verrouillage (104) 28 de manière à verrouiller de façon irréversible l'organe de fermeture (94) et l'organe de commande (70).

9. Le dispositif (10) selon l'une quelconque des revendications 6 ou 8, **caractérisé en ce que** le dispositif (10) de plus comporte des moyens de positionnement (92) pour l'organe de commande (70) aptes à le maintenir en position centrale et à assurer la liaison mécanique entre l'organe (70) et la paroi interne (36) de manière que les efforts en cas de choc ou de chute se répartissent sur l'ensemble de la paroi interne (36).

10. Le dispositif (10) selon la revendication 9 **caractérisé en ce que** les moyens de positionnement sont susceptibles d'absorber un fluide cryogénique, tel que de l'azote liquide, et **en ce que** les moyens de positionnement sont agencés dans tout ou partie du volume intérieur (38) de l'ampoule (12).

11. Le dispositif (10) selon la revendication 10, **caractérisé en ce que** les moyens d'absorption (92) constituent les moyens de positionnement de l'organe de commande (70).

## Patentansprüche

1. Vorrichtung (10) zum Transportieren und/oder Aufbewahren von Produkten, insbesondere vom Typ Kryostat, die eine äußere Verpackungsstruktur (14) umfasst, die Wände aufweist, die ein Innenvolumen (16) begrenzen, innerhalb derer eine isolierende Doppelwandampulle (12) angeordnet ist, deren Körper (32) durch eine Außenwand (34) und eine Innenwand (36), die ein Innenvolumen (38) begrenzt, gebildet ist, wobei die Ampulle (12) einen oberen Hals (40) aufweist, der eine obere Befüllungsöffnung (42) begrenzt, wobei die Vorrichtung (10) außerdem Mittel (46) zum Tragen der Ampulle umfasst, die Einhakmittel (48) aufweisen, die dafür ausgelegt sind, direkt oder indirekt mit der einzigen Innenwand (36) der Ampulle (12) zusammenzuwirken, um die Ampulle (12) durch ihren Hals (40) vertikal aufzuhängen, derart, dass die Ampulle (12) in dem leeren Raum innerhalb des Innenvolumens (16), das durch die äußere Verpackungsstruktur (14, 18, 22) begrenzt ist, ohne Kontakt zwischen der Außenwand (34) der Ampulle (12) und den Wänden (24, 22) der äußeren Verpackungsstruktur frei hängt, wobei die Vorrichtung **dadurch gekennzeichnet ist, dass** die Mittel (46) zum Tragen der Ampulle durch Aufhängen der Ampulle (12) eine Tragwand (20) umfassen, die wenigstens eine der Wände der äußeren Verpackungsstruktur (14) ist.

2. Vorrichtung (10) nach Anspruch 1, **dadurch gekennzeichnet, dass** die Tragwand (20, 46) der Ampulle (12) eine Fähigkeit zur elastischen Verformung aufweist, die in der Weise bestimmt ist, dass eine begrenzte Bewegung der Ampulle (12) in dem Innenvolumen (16), das durch die äußere Verpackungsstruktur (14) definiert ist, möglich ist, ohne dass die Außenwand (34) der aufgehängten Ampulle (12) mit den Wänden der äußeren Verpackungsstruktur (14) in Kontakt gelangt.

3. Vorrichtung (10) nach einem der Ansprüche 1 oder 2, **dadurch gekennzeichnet, dass** sich die Tragwand (20, 46) elastisch verformen kann, um alle mechanischen Kräfte oder einen Teil hiervon, die sich aus Stößen ergeben, die von der äußeren Verpackungsstruktur (14) aufgenommen werden, zu absorbieren, insbesondere im Fall eines Herabfallens der Vorrichtung, derart, dass die Übertragung solcher Kräfte auf die Ampulle (12) vermieden oder begrenzt wird.

4. Vorrichtung (10) nach einem der vorhergehenden Ansprüche, **dadurch gekennzeichnet, dass** die Tragwand (20) Mittel (48) zum Einhaken durch Aufhängen der Ampulle (12) umfasst und dass die Tragwand (20) ein Deckel der äußeren Verpackungsstruktur (14) ist, der vom polyethrischen oder zylindrischen Typ ist.

5. Vorrichtung (10) nach einem der vorhergehenden Ansprüche, **dadurch gekennzeichnet, dass** die Tragwand (20) ein rohrförmiges Element (50) umfasst, das sich wenigstens teilweise durch die obere Öffnung (42) für die Befüllung der Ampulle (12) erstreckt und eine Mündung (56) begrenzt, die in das Innenvolumen (38) der Ampulle (12) mündet, und dass die Einhakmittel (48) mit dem rohrförmigen Element (50) fest verbunden sind.

6. Vorrichtung (10) nach Anspruch 5, **dadurch gekennzeichnet, dass** die Einhakmittel (48) beweglich zwischen einer eingezogenen Position und einer Verriegelungsposition montiert sind und dass die Vorrichtung (10) ein Steuerorgan (70) umfasst, dessen vertikale Einführung in Abwärtsrichtung in die Mündung (56) des rohrförmigen Elements (50) die Verlagerung der Einhakmittel (48) in die Verriegelungsposition hervorruft, wobei das Steuerorgan (70) dafür ausgelegt ist, die Einhakmittel (48) in der Verriegelungsposition zu blockieren.

7. Vorrichtung (10) nach Anspruch 6, **dadurch gekennzeichnet, dass** die Vorrichtung (10) ein Schließorgan (94) umfasst, das dazu bestimmt ist, vertikal in das Steuerorgan (70) eingeführt zu werden, derart, dass die Integrität der Vorrichtung für einmalige Nutzung gewährleistet ist.

8. Vorrichtung (10) nach Anspruch 7, **dadurch gekennzeichnet, dass** das Schließorgan (94) einen Kranz (98) umfasst, der komplementär zu dem Kranz (84) des Steuerorgans (70) auf seiner äußeren vertikalen Fläche mit einem ringförmigen Verriegelungsring (102) versehen ist, der dafür ausgelegt ist, mit dem Kranz des Steuerorgans (70), dessen innere vertikale Fläche wenigstens eine Verriegelungskerbe (104, 28) aufweist, zusammenzuwirken, derart, dass das Schließorgan (94) und das Steuerorgan (70) irreversibel verriegelt werden.

9. Vorrichtung (10) nach einem der Ansprüche 6 oder 8, **dadurch gekennzeichnet, dass** die Vorrichtung (10) außerdem Positionierungsmittel (92) für das Steuerorgan (70) umfasst, die dafür ausgelegt sind, es in seiner Mittelposition zu halten und die mechanische Verbindung zwischen dem Organ (70) und der Innenwand (36) sicherzustellen, derart, dass sich die Kräfte im Fall eines Stoßes oder eines Herabfallens auf die gesamte Innenwand (36) verteilen.

10. Vorrichtung (10) nach Anspruch 9, **dadurch gekennzeichnet, dass** die Positionierungsmittel ein kryogenes Fluid wie etwa flüssigen Stickstoff absorbieren können und dass die Positionierungsmittel im gesamten Innenvolumen (38) der Ampulle (12) oder in einem Teil hiervon angeordnet sind.

11. Vorrichtung (10) nach Anspruch 10, **dadurch gekennzeichnet, dass** die Absorptionsmittel (92) die Mittel zum Positionieren des Steuerorgans (70) bilden.

## Claims

1. An apparatus (10) for transporting and/or storing products, in particular of the cryostat type, including an outer packaging structure (14) comprising walls delimiting an inner volume (16) within which is arranged an insulating double-wall bulb (12) whose body (32) is constituted by an outer wall (34) and an inner wall (36) delimiting an interior volume (38), the bulb (12) including an upper neck (40) delimiting an upper filling opening (42), the apparatus (10) further comprising means for support (46) of the bulb which include means for attachment (48) adapted to cooperate directly or indirectly with the single inner wall (36) of the bulb (12) for vertically suspending the bulb (12) by its neck (40) such that the bulb (12) hangs freely in the empty space within the inner volume (16) delimited by the outer packaging structure (14, 18, 22), without contact between the outer wall (34) of the bulb (12) and the walls (24, 22) of the outer packaging structure (14), the apparatus being **characterized in that** the means for support (46) of the bulb by suspension of the bulb (12) comprise a support wall (20) which is at least one of the walls of the outer packaging structure (14).

2. The apparatus (10) according to claim 1, **characterized in that** the support wall (20, 46) for the bulb (12) has an elastic deformability determined so as to permit limited movement of the bulb (12) within the inner volume (16) defined by the outer packaging structure (14), without the outer wall (34) of the suspended bulb (12) coming into contact with the walls of the outer packing structure (14).

3. The apparatus (10) according to either of claims 1 to 2, **characterized in that** the support wall (20, 46) is capable of being elastically deformed to absorb all or part of the mechanical loads resulting from shock(s) received by the outer packaging structure (14), in particular in case the apparatus falls, so as to avoid or limit the transmission of such loads to the bulb (12).

4. The apparatus (10) according to any of the preceding claims, **characterized in that** the support wall (20) includes the means for attachment (48) by suspension of the bulb (12) and the support wall (20) is a lid of the outer packaging structure (14) which is of the polyhedral or cylindrical type.

5. The apparatus (10) according to any of the preceding claims, **characterized in that** the support wall (20) includes a tubular element (50) extending at least partly through the upper filling opening (42) of the bulb (12) and delimiting an orifice (56) opening into the interior volume (38) of the bulb (12), and **in that** the means for attachment (48) are integral with the the tubular element (50).

6. The apparatus (10) according to claim 5, **characterized in that** the means for attachment (48) are mounted so as to be movable between a retracted position and a locking position, and **in that** the apparatus (10) includes a control member (70) whose vertical downward introduction into the orifice (56) of the tubular element (50) causes displacement of the means for attachment (48) towards the locking position, the control member (70) being adapted to block the means for attachment (48) in the locking position.

7. The apparatus (10) according to claim 6, **characterized in that** the apparatus (10) includes a closure member (94) intended to be introduced vertically into the control member (70) so as to ensure the integrity of the apparatus for single use.

8. The apparatus (10) according to claim 7, **characterized in that** the closure member (94) includes a collar (98) which, complementary to the collar (84) of the control member (70), is furnished on its outer vertical face with an annular locking ring (102) which is adapted to cooperate with the collar of the control member (70) whose inner vertical face includes at least one locking notch (104) 28 so to irreversibly lock the closure member (94) and the control member (70).

9. The apparatus (10) according to either of claims 6 and 8, **characterized in that** the apparatus (10) further includes positioning means (92) for the control member (70) which are adapted to keep it in a central position and to ensure the mechanical connection between the member (70) and the inner wall (36) such that the loads in the case of shock or fall are distributed over the entire inner wall (36).

10. The apparatus (10) according to claim 9, **characterized in that** the positioning means are capable of absorbing a cryogenic fluid, such as liquid nitrogen, and **in that** the positioning means are arranged in all or part of the interior volume (38) of the bulb (12).

11. The apparatus (10) according to claim 10, **characterized in that** the absorbing means (92) constitute the positioning means for the control member (70).
